# FASCICULE DE BREVET EUROPEEN

(11) **EP 1 551 261 B1**
(45) Date de publication et mention de la délivrance du brevet: **12.09.2007**
(21) Numéro de dépôt: 03763944.0
(22) Date de dépôt: 09.07.2003
(51) Int. Cl.: A47J 27/21

(54) **LA BOUILLOIRE ELECTRIQUE**
ELEKTRISCHER WASSERKOCHER
ELECTRIC KETTLE

(30) Priorité: 10.07.2002 FR 0208688
(43) Date de publication de la demande: 13.07.2005
(73) Titulaire: SEB SA, 69130 Ecully (FR)
(72) Inventeur: GAULARD, Hervé, F-39700 Courtefontaine (FR)
(74) Mandataire: Lemoine, Jean-Sébastien
(86) Numéro de dépôt international: PCT/FR2003/002146
(87) Numéro de publication internationale: WO 2004/006738

(56) Documents cités:
- EP-A- 0 895 742
- GB-A- 2 299 497

## Description

La présente invention concerne une bouilloire électrique dite sans fil, c'est à dire comportant une base d'alimentation et un récipient amovible adapté à être connecté électriquement à la base.

On connaît une bouilloire sans fil dont la base d'alimentation comporte des moyens de connexion électrique adaptés à être reliés à une source extérieure de courant, et, dont le récipient comporte un réservoir adapté à contenir le liquide à chauffer, un dispositif électrique de chauffe adapté à chauffer le liquide dans le réservoir, des moyens complémentaires de connexion électrique adaptés, quand le récipient est posé sur la base d'alimentation, à coopérer avec les moyens de connexion électrique et à alimenter électriquement le dispositif de chauffe, et des moyens de commande qui sont adaptés à commander l'alimentation électrique du dispositif électrique de chauffe, et qui comprennent un interrupteur mobile entre une position ouverte et une position fermée.

Dans une telle bouilloire, l'ensemble permettant l'alimentation électrique du dispositif de chauffe et la commande de cette alimentation électrique est réparti entre la base d'alimentation et le récipient, et les moyens de commande sont disposés sur le récipient.

Dans une telle bouilloire, le bouton de commande manuelle est disposé à proximité immédiate de la poignée du récipient, soit à son extrémité supérieure, soit à son extrémité inférieure. Quelle que soit la position du bouton de commande manuelle, sa présence rend peu esthétique le récipient qui est pourtant l'élément de la bouilloire qui est vu par les convives, la base d'alimentation restant dans la cuisine. De plus, quand le bouton de commande est situé à l'extrémité inférieure de la poignée, il est difficilement accessible quand le récipient est posé sur la base. Et quand le bouton est situé à l'extrémité supérieure de la poignée, un mécanisme complexe est nécessaire pour transmettre le mouvement du bouton de commande manuelle à l'interrupteur de mise en marche situé à proximité des moyens de chauffe.

Par ailleurs, certaines bouilloires permettent une connexion électrique entre le récipient et la base d'alimentation quelle que soit la position angulaire dans le plan horizontal du récipient sur la base. Dans une telle bouilloire, le bouton de commande manuelle peut se trouver d'autant moins accessible qu'il fait un angle proche de 180° avec le côté de la base accessible à l'utilisateur. Ainsi, bien que dans une telle bouilloire le récipient peut être posé dans n'importe quelle position angulaire sur la base, il est quand même préférable de faire en sorte qu'il soit dans une position dans laquelle le bouton de commande manuelle est accessible.

On connaît également une bouilloire du type défini par le préambule de la revendication 1. Une telle bouilloire est décrite dans GB2299497.

Le problème posé est d'avoir une bouilloire dans laquelle le bouton de commande manuelle ne produit pas de gêne esthétique sur le récipient, soit facilement accessible, et ceci quelle que soit la position angulaire du récipient sur la base quand la bouilloire permet une connexion électrique sur 360° autour de la verticale.

Selon l'invention dans la bouilloire du type précité, le récipient comprend des moyens de commande adaptés à couper l'alimentation électrique du dispositif électrique de chauffe et comprenant un interrupteur mobile entre une position ouverte et une position fermée, et la bouilloire comprend des moyens de transmission adaptés, quand le récipient est disposé sur la base, à entraîner l'interrupteur de sa position ouverte à sa position fermée quand le bouton de commande manuelle est entraîné de sa position de repos à sa position d'activation.

Selon un mode particulier de l'invention, quand les moyens de connexion électrique de la base d'alimentation et les moyens complémentaires de connexion électrique du récipient sont en contact, les moyens de transmission sont adaptés à mettre l'interrupteur en position fermée quand le bouton de commande manuelle est mis en position d'activation.

Selon un autre mode particulier les moyens de transmission sont conformés de façon à mettre l'interrupteur en position fermée quand le bouton de commande manuelle est mis en position d'activation quelle que soit la position angulaire du récipient sur la base d'alimentation.

D'autres particularités et avantages apparaîtront à la lumière de la description qui va suivre.

Aux dessins annexés, donnés à titre d'exemple non limitatif :
- la figure 1 est une vue éclatée en perspective de la base d'alimentation de la bouilloire électrique selon l'invention ;
- la figure 2 est une vue éclatée en perspective du récipient de la bouilloire électrique selon l'invention ;
- la figure 3 est une vue en coupe de la bouilloire, le bouton de commande manuelle étant en position de repos, le système électrique de la bouilloire n'étant pas représenté ; et
- la figure 4 est une vue similaire à la figure 3, le bouton de commande manuelle étant en position d'activation.

Une bouilloire électrique comprend une base d'alimentation 1 et un récipient 2 amovible de la base d'alimentation 1 adapté à être connecté électriquement à la base d'alimentation 1.

La base d'alimentation 1 comporte des moyens de connexion électrique 3 adaptés à être reliés à une source extérieure de courant par l'intermédiaire d'une fiche électrique classique.

Le récipient 2 comporte un réservoir 4 adapté à contenir le liquide à chauffer.

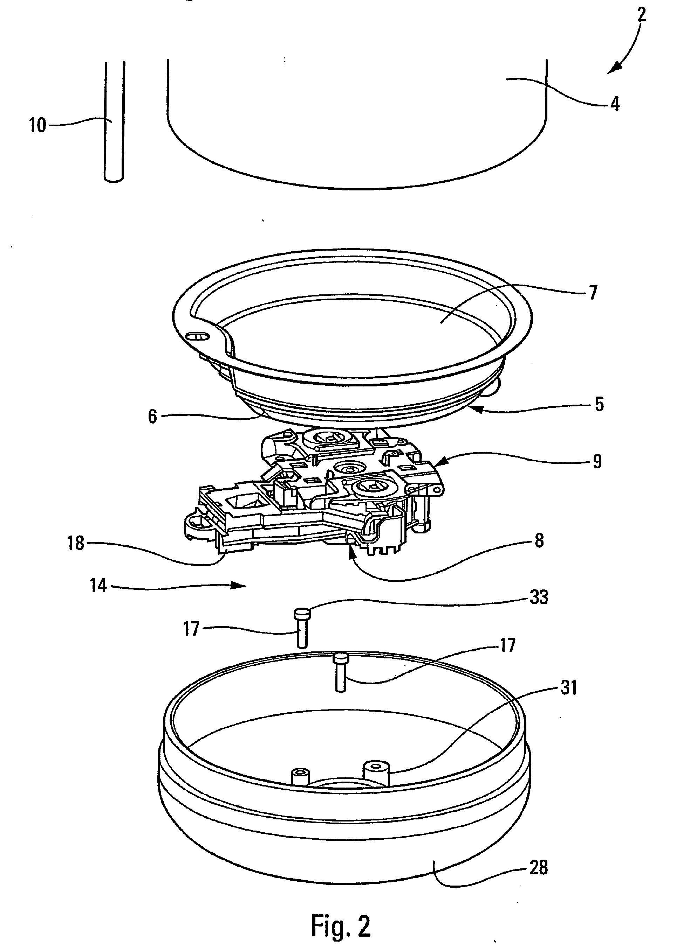

Le récipient 2 comporte également un dispositif électrique de chauffe 5 adapté à chauffer le liquide dans le réservoir 4. Dans l'exemple illustré à la figure 2, le dispositif de chauffe 5 comprend une résistance électrique 6 reliée à la paroi de fond 7 du réservoir 4 qui constitue ainsi une paroi chauffante.

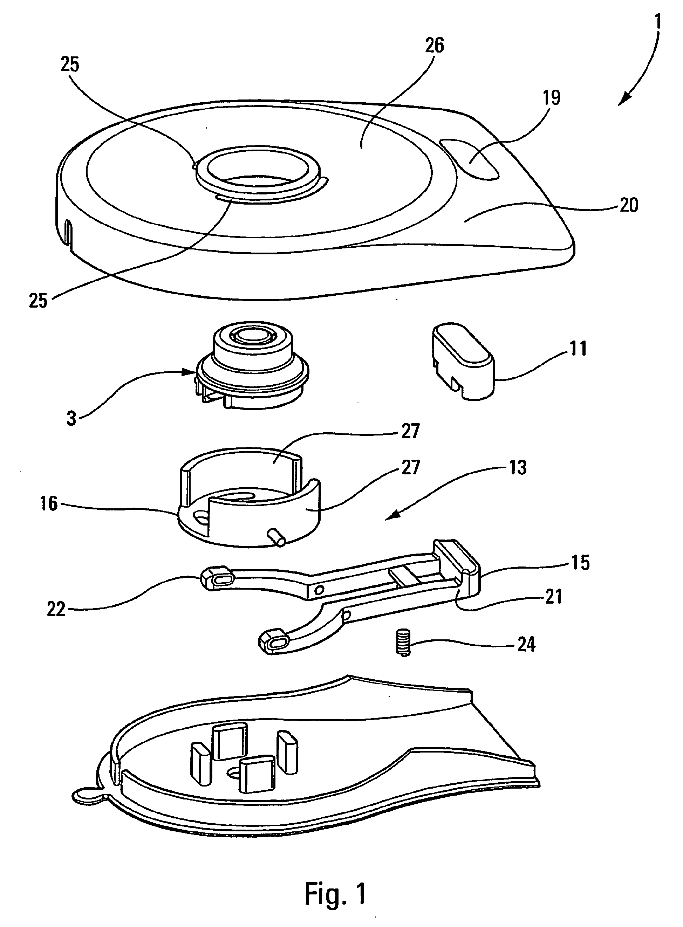

Le récipient 2 comporte aussi des moyens complémentaires de connexion électrique 8 adaptés, quand le récipient 2 est posé sur la base d'alimentation 1, à coopérer avec les moyens de connexion électrique 3 et à alimenter électriquement le dispositif de chauffe 5. Dans le présent exemple, les moyens de connexion électrique 3 et les moyens complémentaires de connexion électrique 8 sont adaptés à établir la connexion électrique quelle que soit la position angulaire du récipient 2 sur la base d'alimentation 1, les conducteurs (phase, neutre et terre) étant disposés de façon concentrique (voir la figure 1).

De plus, le récipient 2 comporte des moyens de commande 9, adaptés à commander l'alimentation électrique du dispositif électrique de chauffe 5. Dans le présent exemple, ces moyens de commande 9 sont solidarisés aux moyens complémentaires de connexion électrique 8 et constituent un système électrique connu de l'homme du métier. Les moyens de commande 9 comprennent de façon classique un premier bilame qui est connecté à un détecteur de chauffe et qui permet de couper l'alimentation électrique en cas de surchauffe du dispositif de chauffe 5 (par exemple, à cause de fonctionnement à sec), un deuxième bilame qui est connecté à un thermostat sensible à une température prédéterminée de la vapeur amenée par un canal à vapeur 10, et qui permet de couper l'alimentation électrique quand le liquide à chauffer atteint la température prédéterminée, et un interrupteur bistable qui est mobile entre une position ouverte et une position fermée, qui est adapté à être commandé manuellement permettant la mise en marche et l'arrêt volontaire de la chauffe du liquide, et qui passe de sa position fermée à sa position ouverte lors de la déconnexion des moyens complémentaires de connexion électrique 8 des moyens de connexion électrique 3.

Selon l'invention, la base d'alimentation 1 comprend un bouton de commande manuelle 11 mobile entre une position de repos et une position d'activation.

La bouilloire comprend des moyens de transmission 12 qui sont adaptés à mettre l'interrupteur en position fermée quand le bouton de commande manuelle 11 est mis en position d'activation, le récipient 2 étant évidemment connecté à la base d'alimentation 1 par la mise en contact des moyens de connexion électrique 3 de la base d'alimentation 1 avec les moyens complémentaires de connexion électrique 8 du récipient 2.

Les moyens de transmission 12 comprennent des éléments de transmission 13 qui sont logés dans la base d'alimentation 1, et des éléments complémentaires de transmission 14 qui sont logés dans le récipient 2.

Les éléments de transmission 13 sont mobiles entre une position de repos dans laquelle le bouton de commande manuelle 11 est en position de repos, et une position d'activation dans laquelle le bouton de commande manuelle 11 est en position d'activation. Les éléments complémentaires de transmission 14 sont mobiles entre une position de repos, et une position d'activation dans laquelle les éléments de transmission 13 sont en position d'activation et l'interrupteur est en position fermée, le récipient 2 étant connecté à la base d'alimentation 1.

Comme on peut le voir aux figures 1, 3 et 4, les éléments de transmission 13 comprennent un levier 15 monté de façon pivotante autour d'un axe de pivotement 23, et un poussoir 16 monté de façon coulissante. De même, comme on peut le voir aux figures 2, 3 et 4, les éléments complémentaires de transmission 14 comprennent deux coulisseaux 17 montés de façon coulissante, et un bras 18 monté de façon pivotante autour d'un axe de rotation 36 et de façon solidaire de l'interrupteur (et donc aux moyens de commande 9).

Le bouton de commande manuelle 11 est monté de façon coulissante dans un logement 19 qui débouche dans une zone de la surface supérieure 20 de la base d'alimentation 1. De ce fait, le bouton de commande manuelle 11 est accessible quelle que soit la position angulaire du récipient 2 et ne gêne pas son aspect esthétique.

Le levier 15 possède une première extrémité 21 à laquelle est fixée de façon pivotante le bouton de commande manuelle 11, ce qui permet à ce dernier de ne pas être gêné dans son mouvement dans le logement 19. Le levier 15 possède une deuxième extrémité 22 à laquelle est fixé de façon pivotante le poussoir 16. Le levier 15 et le poussoir 16 sont mobiles entre une position de repos dans laquelle le bouton de commande manuelle 11 est en position de repos, et une position d'activation dans laquelle le bouton de commande manuelle 11 est en position d'activation. Dans le présent exemple, un ressort 24 sollicite en permanence le levier 15, le bouton de commande manuelle 11 et le poussoir 16 dans leur position de repos respective.

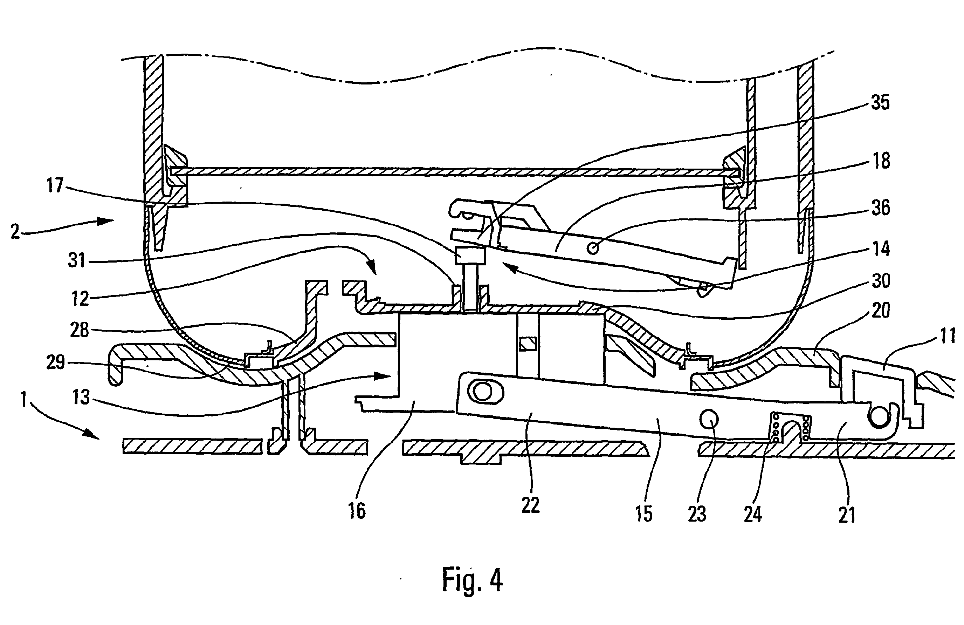

Comme on peut le voir à la figure 1, la paroi de réception 26 sur laquelle repose le récipient 2 quand il est connecté à la base d'alimentation 1 comporte deux ouvertures 25 de forme en arc de cercle. Le poussoir 16 est conformé de sorte que sa partie supérieure puisse passer au travers des ouvertures 25 de façon à faire saillie hors de la paroi de réception 26 quand il est dans sa position d'activation (voir la figure 4).

Dans le présent exemple, les moyens de transmission 12 sont conformés de façon à mettre l'interrupteur en position fermée quand le bouton de commande manuelle 11 est mis en position d'activation quelle que soit la position angulaire du récipient 2 sur la base d'alimentation 1. A cet effet, dans cet exemple, les ouvertures 25 sont disposées co-axialement et radialement à l'extérieur des moyens de connexion électrique 3, et, en conséquence, elles doivent être séparés angulairement l'une de l'autre de façon suffisante pour permettre la solidarisation des moyens de connexion électrique 3 à la paroi de réception 26. Ici, les deux ouvertures 25 sont séparées l'une de l'autre d'environ 60° et s'étendent chacune selon un secteur angulaire proche de 120°.

Le poussoir 16 a la forme générale d'un cylindre creux adapté à coulisser autour des moyens de connexion électrique 3 (voir la figure 1). Il possède deux parois latérales 27 séparées angulairement l'une de l'autre, l'extrémité supérieure de chaque paroi latérale 27 étant une adaptée à passer au travers d'une ouverture 25.

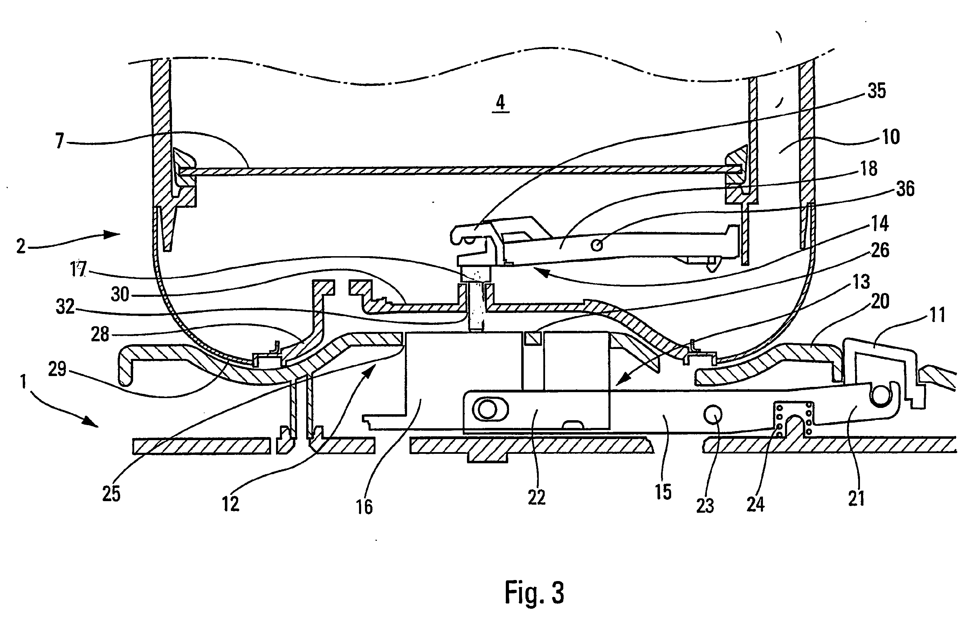

De façon à éviter tout endommagement, quand le poussoir 16 est dans sa position de repos, il ne fait pas saillie hors de la paroi de réception 26 (voir la figure 3).

Bien évidemment, le levier 15 est agencé de telle sorte que le poussoir 16 soit situé dans la zone centrale de la paroi de réception 26 et de sorte que, en position d'activation, le poussoir 16 fasse saillie de façon suffisante pour mettre les éléments complémentaires de transmission 14 dans leur position de contact.

Le récipient 2 comprend une paroi de fond 28 qui possède un épaulement annulaire 29 faisant saillie hors du récipient 2 dans la direction axiale et un renfoncement central 30. L'épaulement annulaire 29 repose directement sur la paroi de réception 26 la base d'alimentation 1.

Chaque coulisseau 17 est monté de façon coulissante, entre une position de repos et une position d'activation, dans un guide 31 solidaire du récipient 2, l'extrémité inférieure du guide 31 débouchant dans le renfoncement central 30 et formant un orifice 32. Chaque coulisseau 17 comprend une extrémité supérieure formant une collerette 33 qui est adaptée à venir en butée contre l'extrémité supérieure du guide 31 de manière à définir la position de repos du coulisseau 17. Chaque coulisseau 17 comprend une extrémité inférieure qui est adaptée à faire saillie hors de l'orifice 32, et qui est protégée de tout dommage par différence de dénivelé entre l'épaulement annulaire 29 et le renfoncement central 30.

De façon à permettre le contact entre les coulisseaux 17 et le poussoir 16 puis leur entraînement par ce dernier, les orifices 32, au moins partiellement, sont disposés au droit d'au moins une partie des ouvertures 25 quand le récipient 2 est connecté à la base d'alimentation 1.

Dans le présent exemple, les moyens de transmission 12 sont conformés de façon à mettre l'interrupteur en position fermée quand le bouton de commande manuelle 11 est mis en position d'activation quelle que soit la position angulaire du récipient 2 sur la base d'alimentation 1. A cet effet, dans cet exemple, les orifices 32 sont disposés radialement à l'extérieur des moyens complémentaires de connexion électrique 8, et sont séparés l'un de l'autre de façon qu'il y ait toujours au moins un orifice 32 au droit d'au moins une des ouvertures 25. Ici, les deux orifices 32 sont séparés l'un de l'autre d'environ 90°.

Quand le récipient 2 est posé sur la base d'alimentation, la partie inférieure d'au moins un coulisseau 17 se trouve juste au-dessus de l'extrémité supérieure du poussoir 16. Quand le bouton de commande manuelle 11 passe de sa position de repos à sa position d'activation, il passe par une position dans laquelle le poussoir 16 vient en contact avec au moins un coulisseau, définissant ainsi une position de contact du bouton de commande manuelle 11, du levier 15 et du poussoir 16.

Le poussoir 16 peut entraîner chaque coulisseau 17 lui faisant face jusqu'à ce que le poussoir 16 vienne en butée contre l'orifice 32. Bien évidemment les moyens de transmission 12 sont agencés de sorte que chaque coulisseau 17 soit en position d'activation avant que le poussoir 16 vienne en butée contre le récipient 2.

Le bras 18, fixé l'interrupteur bistable, possède une extrémité libre 35 située au droit des collerettes 33 de l'ensemble des coulisseaux 17.

Quand le bouton de commande manuelle 11 passe de sa position de repos à sa position d'activation, il passe par une position dans laquelle au moins un coulisseau 17, entraîné par le poussoir 16, vient en contact avec l'extrémité libre 35 du bras 18, définissant ainsi une position de transmission du bouton de commande manuelle 11, du levier 15, du poussoir 16 et des coulisseaux 17.

Le bras 18 étant solidarisé à l'interrupteur bistable, une fois la position d'équilibre de l'interrupteur franchie, le bras 18 passe dans sa position d'activation et l'interrupteur passe dans sa position fermée. Bien évidemment, les moyens de transmission 12 sont agencé de telle sorte que le bras soit en position d'équilibre avant que le poussoir 16 vienne en butée contre le récipient 2.

Bien évidemment, le bras 18 est agencé de sorte que son extrémité libre 35 soit située dans la zone centrale de la paroi de fond 28, et de sorte qu'il entraîne l'interrupteur en position fermée avant que le poussoir 16 soit en butée contre le récipient 2.

Ainsi, la bouilloire selon la présente invention présente l'intérêt de pouvoir utilisé des moyens de commande, des moyens de connexion électrique et des moyens complémentaires de connexion électrique connus et disponibles, c'est à dire sans utiliser de tels éléments conçus spécialement, ce qui permet, évidemment, de réduire les coûts de production.

Bien évidemment la présente invention n'est pas limitée au mode de réalisation correspondant aux figures 1 à 4. Il est par exemple possible d'avoir une bouilloire dans laquelle le récipient ne peut prendre qu'une seule position angulaire de connexion sur la base d'alimentation.

Il est aussi possible d'avoir des moyens de transmission différents de ceux décrits ci-dessus. Il serait par exemple possible d'avoir des moyens de connexion électrique entourant les éléments de transmission, et des moyens complémentaires de connexion électrique entourant les éléments complémentaires de transmission.

Il serait aussi possible d'avoir un coulisseau unique de forme cylindrique équivalente à la forme du poussoir décrit en relation avec les présentes figures, les orifices étant séparés angulairement l'un de l'autre de façon suffisante pour permettre la solidarisation des moyens complémentaire de connexion électrique à la paroi de fond.

Bien évidemment le nombre d'ouverture et celui d'orifice peut être modifié, au moins un orifice devant se trouver en face d'au moins une ouverture quand le récipient est connecté à la base.

## Revendications

1. Bouilloire électrique comprenant, d'une part, une base d'alimentation (1) comportant des moyens de connexion électrique (3) qui sont adaptés à être reliés à une source extérieure de courant, et un bouton de commande manuelle (11) qui est mobile entre une position de repos et une position d'activation, et, d'autre part, un récipient (2), amovible de la base d'alimentation (1), comportant un réservoir (4) qui est adapté à contenir un liquide à chauffer, un dispositif électrique de chauffe (5) qui est adapté à chauffer le liquide dans le réservoir (4), et des moyens complémentaires de connexion électrique (8) qui sont adaptés, quand le récipient (2) est posé sur la base d'alimentation (1), à coopérer avec les moyens de connexion électrique (3) et à alimenter électriquement le dispositif de chauffe (5), **caractérisée en ce que** le récipient (2) comprend des moyens de commande (9) qui sont adaptés à couper l'alimentation électrique du dispositif électrique de chauffe (5) et qui comprennent un interrupteur mobile entre une position ouverte et une position fermée, la bouilloire comprenant des moyens de transmission (12) qui sont adaptés, quand le récipient (2) est disposé sur la base (1), à entraîner l'interrupteur de sa position ouverte à sa position fermée lorsque le bouton de commande manuelle (11) est entraîné de sa position de repos à sa position d'activation.

2. Bouilloire électrique selon la revendication 1, **caractérisée en ce que**, quand les moyens de connexion électrique (3) de la base d'alimentation (1) et les moyens complémentaires de connexion électrique (8) du récipient (2) sont en contact, les moyens de transmission (12) sont adaptés à mettre l'interrupteur en position fermée quand le bouton de commande manuelle (11) est mis en position d'activation.

3. Bouilloire selon la revendication 1 ou 2, **caractérisée en ce que** les moyens de transmission (12) comprennent d'une part, des éléments de transmission (13), logés dans la base d'alimentation (1), mobiles entre une position de repos et une position d'activation dans laquelle le bouton de commande manuelle (11) est en position d'activation, et, d'autre part, des éléments complémentaires de transmission (14), logés dans le récipient (2), mobiles entre une position de repos et une position d'activation dans laquelle les éléments de transmission (13) sont en position d'activation et l'interrupteur est en position fermée, le récipient (2) étant connecté à la base d'alimentation (1).

4. Bouilloire selon la revendication 3, **caractérisée en ce que** les éléments de transmission (13) comprennent un levier (15) monté de façon pivotante par rapport à la base d'alimentation (1), dont une première extrémité (21) est fixée au bouton de commande manuelle (11), et dont la deuxième extrémité (22) est adaptée à entraîner les éléments complémentaires de transmission (14) vers leur position d'activation.

5. Bouilloire selon la revendication 4, **caractérisée en ce que** les éléments de transmission (13) comprennent au moins un poussoir (16) fixé à la deuxième extrémité (22) du levier (15), monté de façon coulissante dans la base d'alimentation (1), et adapté à passer à travers au moins une ouverture (25) réalisée dans une paroi de réception (26) de la base d'alimentation (1) sur laquelle repose le récipient (2), à entrer en contact avec les éléments complémentaires de transmission (14) et à les entraîner dans leur position d'activation quand le bouton de commande manuelle (11) est en position d'activation.

6. Bouilloire selon l'une des revendications 3 à 5, **caractérisée en ce que** les éléments complémentaires de transmission (14) comprennent au moins un coulisseau (17) monté de façon coulissante dans le récipient (2) et adapté à passer à travers au moins un orifice (32) réalisé dans la paroi de fond (28) du récipient (2) et à entrer en contact avec les éléments de transmission (13) et à entraîner l'interrupteur vers sa position fermée quand le bouton de commande manuelle (11) est en position d'activation.

7. Bouilloire selon la revendication 6, **caractérisée en ce qu'**un bras (18) pivotant est monté de façon solidaire à l'interrupteur et est adapté à entrer en contact avec l'ensemble des coulisseaux (17).

8. Bouilloire selon la revendication 6 ou 7, **caractérisée en ce que** la paroi de fond (28) du récipient (2) comprend un épaulement annulaire (29) faisant saillie hors du récipient (2) et adapté à reposer sur la base d'alimentation (1), et un renfoncement central (30) dans lequel est réalisé l'ensemble des orifices (32).

9. Bouilloire selon l'une des revendications 1 à 8, **caractérisée en ce que** le bouton de commande manuelle (11) est sollicité en permanence vers sa position de repos par un ressort (24).

10. Bouilloire selon l'une des revendications 1 à 9, **caractérisée en ce que** l'interrupteur est du type bistable.

11. Bouilloire selon l'une des revendications 1 à 10, **caractérisée en ce que** les moyens de transmission (12) sont conformés de façon à mettre l'interrupteur en position fermée quand le bouton de commande manuelle (11) est en position d'activation quelle que soit la position angulaire du récipient (2) sur la base d'alimentation (1).

12. Bouilloire selon la revendication 11, **caractérisée** ne ce que les moyens de transmission (12) sont de symétrie cylindrique et coaxiaux aux moyens de connexion électrique (3) et aux moyens complémentaires, de connexion électrique (8).

13. Bouilloire selon les revendications 5, 6 et 12, **caractérisée en ce que** les moyens de transmission (12) sont disposés radialement à l'extérieur des moyens de connexion électrique (3) et des moyens complémentaires de connexion électrique (8), l'ensemble des ouvertures (25) de forme en arc de cercle et l'ensemble des orifices (32) étant répartis radialement et angulairement de façon à ce que, quelle que soit la position angulaire du récipient (2), au moins une partie de section angulaire d'une ouverture (25) soit au droit d'un orifice (32).

14. Bouilloire selon la revendication 13, **caractérisée en ce que** le poussoir (16) a la forme générale d'un cylindre creux adapté à coulisser autour des moyens de connexion électrique (3), et dont les parois latérales (27) ont leur extrémité supérieure adaptée à passer au travers de l'ensemble des ouvertures (25).

15. Bouilloire selon la revendication 14, **caractérisée en ce que** la base d'alimentation (1) comprend deux ouvertures (25) séparées l'une de l'autre d'environ 60°, et s'étendant chacune selon un secteur angulaire proche de 120°.

16. Bouilloire selon l'une des revendications 13 à 15, **caractérisée en ce que** chaque coulisseau (17) comprend dans sa partie supérieure une collerette (33) adaptée à venir en butée contre l'extrémité supérieure du guide (31) dans lequel le coulisseau (17) coulisse, de façon à déterminer la position de repos du coulisseau (17).

17. Bouilloire selon les revendications 15 et 16, **caractérisée en ce que** les deux coulisseaux (17) sont séparées angulairement l'un de l'autre d'environ 90°.

## Claims

1. Electric kettle including on the one hand, a power supply base (1) comprising electrical connection means (3) suitable for being connected to an external electrical source, and a manual control button (11) movable between a resting position and an activation position, and on the other hand, a receptacle (2), removable from the power supply base (1), comprising a container (4) suitable for containing a liquid to be heated, an electrical heating device (5) suitable for heating the liquid in the container (4), and complementary electrical connection means (8) which are suitable, when the receptacle (2) is placed on the power supply base (1), for cooperating with the electrical connection means (3) and supplying electrical power to the heating device (5), **characterized in that** the receptacle (2) includes control means (9) suitable for cutting the electrical power supply to the electrical heating device (5) and which include a switch that is movable between an open position and a closed position, wherein the kettle includes transmission means (12) suitable, when the receptacle (2) is placed on the base (1), for shifting the switch from its open position to its closed position when the manual control button (11) is shifted from its resting position to its activation position.

2. Electric kettle according to claim 1, **characterized in that**, when the electrical connection means (3) of the power supply base (1) and the complementary electrical connection means (8) of the receptacle (2) are in contact, the transmission means (12) are suitable for shifting the switch into the closed position when the manual control button (11) is shifted to the activation position.

3. Kettle according to claim 1 or 2, **characterized in that** the transmission means (12) include on the one hand, transmission elements (13) housed in the power supply base (1), movable between a resting position and an activation position in which the manual control button (11) is in the activation position, and on the other hand, complementary transmission elements (14) housed in the receptacle (2), movable between a resting position and an activation position in which the transmission elements (13) are in the activation position and the switch is in the closed position, with the receptacle (2) being connected to the power supply base (1).

4. Kettle according to claim 3, **characterized in that** the transmission elements (13) include a lever (15) pivotably mounted with respect to the power supply base (1), of which a first end (21) is attached to the manual control button (11), and the second end (22) is suitable for driving the complementary transmission elements (14) towards their activation position.

5. Kettle according to claim 4, **characterized in that** the transmission elements (13) include at least one plunger (16) attached to the second end (22) of the lever (15), slidably mounted in the power supply base (1), and suitable for passing through at least one opening (25) provided in a receiving wall (26) of the power supply base (1) on which the receptacle (2) is resting, for coming into contact with the complementary transmission elements (14) and driving them into their activation position when the manual control button (11) is in the activation position.

6. Kettle according to one of claims 3 to 5, **characterized in that** the complementary transmission elements (14) include at least one sliding element (17) slidably mounted in the receptacle (2) and suitable for passing through at least one orifice (32) provided in the base wall (28) of the receptacle (2) and coming into contact with the transmission elements (13) and driving the switch towards its closed position when the manual control button (11) is in the activation position.

7. Kettle according to claim 6, **characterized in that** a pivoting arm (18) is mounted integrally with the switch and is suitable for coming into contact with all of the sliding elements (17).

8. Kettle according to claim 6 or 7, **characterized in that** the base wall (28) of the receptacle (2) includes an annular shoulder (29) projecting from the receptacle (2) and suitable for resting on the power supply base (1), and a central recess (30) in which all of the orifices (32) are provided.

9. Kettle according to one of claims 1 to 8, **characterized in that** the manual control button (11) is constantly urged towards its resting position by a spring (24).

10. Kettle according to one of claims 1 to 9, **characterized in that** the switch is bistable.

11. Kettle according to one of claims 1 to 10, **characterized in that** the transmission means (12) are designed so as to shift the switch into its closed position when the manual control button (11) is in its activation position, regardless of the angular position of the receptacle (2) on the power supply base (1).

12. Kettle according to claim 11, **characterized in that** the transmission means (12) are cylindrically symmetrical and coaxial to the electrical connection means (3) and to the complementary electrical connection means (8).

13. Kettle according to claims 5, 6 and 12, **characterized in that** the transmission means (12) are radially arranged outside the electrical connection means (3) and the complementary electrical connection means (8), wherein all of the arc-shaped openings (25) and orifices (32) are radially and angularly distributed so that, regardless of the angular position of the receptacle (2), at least one angular cross-section portion of an opening (25) is opposite an orifice (32).

14. Kettle according to claim 13, **characterized in that** the plunger (16) has a general hollow cylinder shape suitable for sliding around the electrical connection means (3), and of which the side walls (27) have an upper end suitable for passing through all of the openings (25).

15. Kettle according to claim 14, **characterized in that** the power supply base (1) includes two openings (25) separated from one another by around 60°, and each extend according to an angular sector close to 120°.

16. Kettle according to one of claims 13 to 15, **characterized in that** the upper portion of each sliding element (17) includes a collar (33) suitable for abutting the upper end of the guide (31) in which the sliding element (17) slides, so as to determine the resting position of said sliding element (17).

17. Kettle according to claims 15 and 16, **characterized in that** the two sliding elements (17) are separated from one another by an angle of about 90°.

## Patentansprüche

1. Elektrischer Schnellkocher mit einerseits einem Zuleitungssockel (1), der eine elektrische Anschlusseinrichtung (3), die zur Verbindung mit einer externen Stromquelle ausgelegt ist, und einen Handbedienungsknopf (11), der zwischen einer Ruheposition und einer Betriebsposition beweglich ist, umfasst und andererseits einem Behälter (2), der von dem Zuleitungssockel (1) abnehmbar ist und aufweist ein Reservoir (4), das zum Aufnehmen einer zu erhitzenden Flüssigkeit ausgelegt ist, und eine elektrische Heizeinrichtung (5), die zum Erhitzen der Flüssigkeit in dem Reservoir (4) ausgelegt ist, und eine komplementäre elektrische Anschlusseinrichtung (8), die so ausgelegt ist, dass sie, wenn der Behälter (2) auf den Zuleitungssockel (1) gesetzt ist, mit der elektrischen Anschlusseinrichtung (3) zusammenwirkt und die Heizeinrichtung (5) elektrisch versorgt, **dadurch gekennzeichnet, dass** der Behälter (2) eine Steuereinrichtung (9) umfasst, die so ausgebildet ist, dass diese die elektrische Versorgung von der elektrischen Heizeinrichtung (5) unterbricht und einen zwischen einer Öffnungsposition und einer Schließposition beweglichen Schalter aufweist, wobei der Schnellkocher eine Übertragungseinrichtung (12) aufweist, die so ausgebildet ist, dass diese, wenn der Behälter (2) auf dem Sockel (1) angeordnet ist, den Schalter aus seiner Öffnungsposition in seine Schließposition mitnimmt, wenn der Handbetätigungsknopf (11) aus seiner Ruheposition in seine Betriebsposition gebracht ist.

2. Elektrischer Schnellkocher nach Anspruch 1, **dadurch gekennzeichnet, dass**, wenn die elektrische Anschlusseinrichtung (3) des Zuleitungssockels (1) und die komplementäre elektrische Anschlusseinrichtung (8) des Behälters (2) in Kontakt miteinander sind, die Übertragungseinrichtung (12) so ausgelegt ist, dass diese den Schalter in die Schließposition bringt, wenn der Handbetätigungsknopf (11) in die Betriebsposition gebracht ist.

3. Schnellkocher nach Anspruch 1 oder 2, **dadurch gekennzeichnet, dass** die Übertragungseinrichtung (12) einerseits aufweist Übertragungselemente (13), die in dem Zuleitungssockel (1) zwischen einer Ruheposition und einer Betriebsposition, in welcher sich der Handbetätigungsknopf (11) in einer Betriebsposition befindet, beweglich angeordnet sind, und andererseits komplementäre Übertragungselemente (14), die in dem Behälter (2) zwischen einer Ruheposition und einer Betriebsposition, in welcher sich die Übertragungselemente (13) in der Betriebsposition befinden und sich der Schalter in der Schließposition befindet, beweglich angeordnet ist, wobei der Behälter (2) an den Zuleitungssockel (1) angeschlossen ist.

4. Schnellkocher nach Anspruch 3, **dadurch gekennzeichnet, dass** die Übertragungselemente (13) einen Hebel (15) aufweisen, der schwenkbar in Bezug zu dem Zuleitungssockel (1) angebracht ist, der mit einem ersten Ende (21) an dem Handbetätigungsknopf (11) befestigt ist, und dessen zweites Ende (22) so ausgebildet ist, dass dieses die komplementären Übertragungselemente (14) in ihre Betriebsposition mitnimmt.

5. Schnellkocher nach Anspruch 4, **dadurch gekennzeichnet, dass** die Übertragungselemente (13) wenigstens einen Drücker (16) umfassen, der an dem zweiten Ende (22) des Hebels (15) befestigt ist, verschiebbar in dem Zuleitungssockel (1) angebracht ist und so ausgebildet ist, dass dieser durch wenigstens ein Loch (25) hindurch gehen kann, das in einer Aufnahmewand (26) des Zuleitungssockels (1) ausgebildet ist, auf welcher der Behälter (2) steht, mit den komplementären Übertragungselementen (14) in Kontakt gelangt und diese in ihre Betriebsposition bringt, wenn sich der Handbetätigungsknopf (11) in der Betriebsposition befindet.

6. Schnellkocher nach den Ansprüchen 3 bis 5, **dadurch gekennzeichnet, dass** die komplementären Übertragungselemente (14) wenigstens einen Gleitstein (17) aufweisen, der in den Behälter (2) verschiebbar angebracht ist und so ausgebildet ist, dass dieser durch wenigstens eine Öffnung (32) hindurch gehen kann, die in der Bodenwand (28) des Behälters (2) ausgebildet ist, und mit den Übertragungselementen (13) in Kontakt gelangt und den Schalter in seine Schließposition bringt, wenn sich der Handbetätigungsknopf (11) in der Betriebsposition befindet.

7. Schnellkocher nach Anspruch 6, **dadurch gekennzeichnet, dass** ein Schwenkarm (18) an dem Schalter fest angebracht ist und so ausgebildet ist, dass dieser mit der Gruppe von Gleitsteinen (17) in Kontakt gelangt.

8. Schnellkocher nach Anspruch 6 oder 7, **dadurch gekennzeichnet, dass** die Bodenwand (28) des Behälters (2) eine Ringschulter (29) aufweist, die vom Behälter (2) nach außen vorsteht und so ausgebildet ist, dass sie auf den Zuleitungssockel (1) aufliegt, und einen zentralen Rücksprung (30), in welchem die Gruppe von Öffnungen (32) ausgebildet ist.

9. Schnellkocher nach einem der Ansprüche 1 bis 8, **dadurch gekennzeichnet, dass** der Handbetätigungsknopf (11) durch eine Feder (24) dauerhaft in seine Ruheposition vorgespannt ist.

10. Schnellkocher nach einem der Ansprüche 1 bis 9, **dadurch gekennzeichnet, dass** der Schalter in bi-stabiler Bauweise vorliegt.

11. Schnellkocher nach einem der Ansprüche 1 bis 10, **dadurch gekennzeichnet, dass** die Übertragungseinrichtung (12) so ausgebildet ist, dass sie den Schalter in die Schließposition bringt, wenn sich der Handbetätigungsknopf (11) in der Betriebsposition befindet, wie auch immer die Winkelposition des Behälters (2) auf dem Zuleitungssockel (1) ist.

12. Schnellkocher nach Anspruch 11, **dadurch gekennzeichnet, dass** die Übertragungseinrichtung (12) symmetrisch zylinderförmig und koaxial mit der elektrischen Anschlusseinrichtung (3) und der komplementären elektrischen Anschlusseinrichtung (8) ist.

13. Schnellkocher nach den Ansprüchen 5, 6 und 12, **dadurch gekennzeichnet, dass** die Übertragungseinrichtung (12) radial auswärts liegend von der elektrischen Anschlusseinrichtung (3) und der komplementären elektrischen Anschlusseinrichtung (8) angeordnet ist, wobei die Gruppe von Löchern (25) in Kreisbogenform und die Gruppe von Öffnungen (32) radial und winkelabhängig verteilt sind, derart, dass wenigstens ein Bereich des Winkelabschnitts eines Lochs (25) gerade zu einem Loch (32) verläuft, ganz gleich wie die Winkelposition des Behälters (2) ist.

14. Schnellkocher nach Anspruch 13, **dadurch gekennzeichnet, dass** der Drücker (16) die allgemeine Form eines Hohlzylinders hat, der so ausgebildet ist, dass dieser um die elektrische Anschlusseinrichtung (3) herum verschiebbar ist, und dessen Seitenwände (27) mit ihrem oberen Ende so ausgebildet sind, dass sie durch die Gruppe von Löchern (25) hindurchgehen können.

15. Schnellkocher nach Anspruch 14, **dadurch gekennzeichnet dass** der Zuleitungssockel (1) zwei Löcher (25) aufweist, die voneinander um 60° getrennt sind und die sich jeweils entlang eines Winkelabschnitts von etwa 120° erstrecken.

16. Schnellkocher nach einem der Ansprüche 13 bis 15, **dadurch gekennzeichnet, dass** jeder Gleitstein (17) in seinem oberen Bereich einen Kragen (33) aufweist, der so ausgebildet ist, dass dieser zum Anschlag an das obere Ende der Führung (31) kommt, in welcher der Gleitstein (17) gleitet, um so die Ruheposition des Gleitsteins (17) zu bestimmen.

17. Schnellkocher nach den Ansprüchen 15 und 16, **dadurch gekennzeichnet, dass** die zwei Gleitsteine (17) winkelmäßig um etwa 90° voneinander getrennt sind.
